# EUROPEAN PATENT SPECIFICATION

(11) **EP 0 944 556 B1**
(45) Date of publication and mention of the grant of the patent: **22.08.2001**
(21) Application number: 96939572.2
(22) Date of filing: 06.11.1996
(51) Int. Cl.: C03C 3/118, C03C 4/00

(54) **PHASE-SEPARATED, NON-CRYSTALLINE OPAL GLASSES**
GETRENNTE PHASEN AUFWEISENDE NICHTKRISTALLINE OPALGLÄSER
VERRES OPALINS NON CRISTALLINS, AVEC SEPARATION DE PHASES

(30) Priority: 14.11.1995 US 6729; 28.11.1995 US 563877
(43) Date of publication of application: 29.09.1999
(73) Proprietor: CORNING INCORPORATED, Corning, N.Y. 14831 (US)
(72) Inventor: STEMPIN, John, Louis, Beaver Dams, NY 14812 (US); WEXELL, Dale, Richard, Corning, NY 14830 (US)
(74) Representative: Marchant, James Ian
(86) International application number: US9617847
(87) International publication number: WO9718171

(56) References cited:
- US-A- 2 921 860
- US-A- 3 498 801
- US-A- 3 661 601
- US-A- 3 728 139
- US-A- 4 309 218
- US-A- 4 309 219
- US-A- 4 536 480

## Description

### Background of the Invention

The invention is directed to the production of spontaneous opal glasses which contain amorphous particles as the opacifying or light-diffusing phase. The glasses are phase separated, but non-crystalline, exhibit a very dense, milky-white appearance (unless colorants are added thereto), and strongly resist weathering and attack by acids and alkaline detergents, thereby recommending their utility for culinary ware and tableware.

This type of glass has been termed an immiscible opal, i.e. an opal glass wherein the opacifying phase is a glass which is insoluble in the basic glass matrix. Numerous attempts have been pursued in the past to develop an example of this type of opal glass which combines good chemical durability and resistance to weathering with a dense, white opacity.

Several attempts have been made in the past to develop opal glasses having the above properties. Examples of such glasses are disclosed in US Patent Nos 4,309,219; 3,498,810; 3,506,464; 3,661,601; 3,723,144 and 3,728,139. More particularly US Patent No 4,309,219 relates to an essentially non-crystalline opal glass with a composition comprising SiO₂, Al₂O₃, K₂O, Na₂O, B₂O₃, P₂O₅ and F with optional ingredients MgO, CaO, BaO and NiO.

US Patent No 4,309,218 relates to a crystalline opal glass comprising SiO₂, Al₂O₃, K₂O, Na₂O, Li₂O, B₂O₃ and P₂O₅. The presence of Li₂O is said to reduce thermal expansion and increased phase separation where there are low levels of Na₂O, BaO and/or P₂O₅.

There continues to be a need for opal glasses demonstrating dense opacity and good chemical durability and resistance to weathering, as well as good aesthetic appearance. Accordingly, the object of the present invention is to develop an improved opal glass, exhibiting excellent opacity and good chemical durability.

### Summary of the Invention

According to one aspect, the present invention provides a spontaneous, essentially non-crystalline opal glass exhibiting a very dense milky-white appearance, a softening point in excess of 700°C, a coefficient of thermal expansion (25°-300°C) of 65-85 x 10⁻⁷/°C, a density of at least 2.4 g/cm³, an opal liquidus higher than 1200°C, and excellent resistance to weathering and attack by alkaline detergents, consisting essentially, expressed in terms of weight percent on the oxide basis as calculated from the batch, of 1.9-3.6% K₂O, 4.2-7.3% Na₂O, 0.2-3.0% Li₂O, 0-1.2% MgO, 0-4.9% CaO, 0-12.5% BaO, 0-0.1% NiO, 0-4% ZnO, 5.3-9.6% B₂O₃, 8.8-13.5% Al₂O₃, 57.2-64.4% SiO₂, 1-6%P₂O₅, and 1.0-2.2% F. The sum of MgO + CaO + BaO is preferably in the range of 4.5 to 12.5%. Preferably the glass contains at least 0.4% ZnO.

### Detailed Description of the Invention

The present invention is designed to produce spontaneous, essentially non-crystalline opal glasses especially suitable for culinary and table ware exhibiting a very dense, milky-white appearance in thin cross section and excellent resistance to attack by alkaline solutions, particularly hot aqueous detergent solutions. The glasses are operable in microwave applications because of their non-crystalline nature and remain non-crystalline even after heat treatments to the annealing and softening points thereof. Hence, the glass articles can be air tempered without the development of crystallization therein. Finally, the glasses demonstrate coefficients of thermal expansion (25°-300°C) over the range of 65-85 x 10⁻⁷/°C, density of at least 2.4 g/cm³ and softening points above 700°C, preferably above 750°C. This latter feature allows the use of high temperature decorating frits where desired. The emulsion or opal liquidus is greater than 1200°C, preferably greater than 1300°C.

The glasses according to the invention are capable of being melted and formed utilizing techniques conventional in the glass art.

The non-crystalline opal glass according to the invention is a fluorophosphate-borosilicate opal glass having 0.2-3% Li₂O. The improved opal glass of the invention exhibits increased opacity, less quench sensitivity, and uniform tintability. The addition of Li₂O results in an opal glass having an increased phase separation which in turn increases the opacity of the glass. With Li₂O present, the phase separation consists of many more small particles in contrast to a fewer number but larger particles without Li₂O present. This increase in opacity is a result of two effects: an increase in emulsion liquidus temperature which produces greater opacity in glasses, and the generation of a separated phase which has more smaller size particles. A key aspect of the invention is that we have found that the present composition yields increased emulsion temperature and consequently, high opacity without undesirable side effects such as gross phase separation and "mother-of-pearl" surface finish.

As a result of the high emulsion temperatures of the present opal glass compositions, we have found that the glasses can be processed by methods such as spinning which results in better opacity than observed in pressed glass products. Generally, spun ware exhibit increased density or opacity over pressed ware of the same thickness. Spinning also produces glossier finish than pressed glass. This is a key aspect of the present invention. Because of the higher emulsion temperature of the inventive glass, the glass exhibits the desired opacity while having appropriate viscosity for spinning.

The necessary components for the development of the light-diffusing, liquid-liquid phase separation comprise 1.0-2.2%F, 1-6% P₂O₅ and 5.3-9.6% B₂O₃. Interspersed phosphate-rich and fluorine-rich non-crystalline glass phases occur when the B₂O₃, P₂O₅ and F are combined with the other oxides in the inventive system. The temperature of the working viscosity (10³-10⁴ poises) for these glasses is about 1360°C or less and can be adjusted by varying the quantities of B₂O₃, Na₂O, K₂O and F in the composition. B₂O₃ encourages the constituents of the inventive glasses to form interspersed amorphous phases manifesting substantial differences in refractive index. These differences provide the very dense white opacity of the opals.

A concentration of F less than about 1.0%, leads to unacceptably high viscosity and the resulting opal glass will commonly contain a crystalline phosphate phase. As the F level is increased, the softening point and working temperature of the glass are significantly reduced. For the present opal glass, we have found that amounts of F greater than about 2.2% do not improve phase separation noticeably and the softening point is reduced to such an extent that decorating with durable, high temperature enamels becomes impossible. Moreover, excessive quantities of F lead to severe mold corrosion and air pollution problems because of the volatility of fluorine compounds during melting of the batch materials. The most preferred level of F is about 1.7%.

The alkaline earth metal oxides are utilized to enhance opacity. Those materials preferentially enter into the glassy matrix of one of the amorphous phases and assist in developing liquid phases with significantly dissimilar refractive indices. High concentrations of CaO can have a very deleterious effect upon the acid and alkali durability exhibited by the glasses since such lead to the formation of a non-durable, amorphous phase in the base glass or by causing extensive surface crystallization on the glass. Consequently, the level of CaO will be held below about 5%.

MgO may be present in relatively small amounts to intensify opacity or to adjust physical properties, but such additions must be carefully controlled to avoid adversely altering other physical properties of the glass to any substantial extent and/or initiating gross phase separation.

BaO is unique among the alkaline earth metal oxides in not only enhancing opacity but also exerting a positive effect upon the acid and alkaline durability of the glasses. Because Al₂O₃, BaO, and SiO₂ improve the chemical durability of the glass, the preferred glasses will contain about 66-90% total of those materials. BaO demonstrates the side effects of lowering the softening point and increasing the density of the glass. Furthermore, at high levels of P₂O₅, large concentrations of BaO hazard gross phase separation.

Al₂O₃ is beneficial in stiffening the glass for forming purposes increasing the chemical durability and improving the decorability thereof. It is believed that Al₂O₃ also acts to density the glassy matrix, thereby preventing any gross migration of Na+ and F-ions to the surface. Whereas Al₂O₃ plays a vital role in achieving excellent resistance to acid and alkali attack, more than about 14% tends to flatten the viscosity of the glass which, in turn, causes an undesirable increase in the working temperature of the glass.

The level of Na₂O is carefully regulated in order to optimize the chemical and physical properties of the glass. K₂O behaves as a fluxing agent and, in conjunction with the other components, provides chemically durable, non-weathering glasses.

ZnO is beneficial in regulating the size of the separated phosphate rich phase in the glass. It is known that ZnO appears in both the bulk phase and the separated phase and alters the surface tension of the separated phase.

We have found that the incorporation of up to 4 wt. % weight ZnO to compositions similar to those disclosed in U.S. Patent 4,309,219 can substantially alter the degree of separation of the secondary phase in the formation of the opal glass. The presence of ZnO significantly lowers the high temperature emulsion liquidus and thereby results in the formation of a separated phase with smaller droplets when no ZnO is present. In effect, the presence of ZnO at a minimum level of about 0.4% increases the surface tension of the separated phase thereby allowing the formation of the smaller spherical amorphous moities. The amount of ZnO required to be present depends on the total Li ₂O content, the speed of ware manufacturing, and the forming temperatures. The addition of ZnO is most beneficial at Li₂O contents greater than 0.2% and when the forming temperatures are below 1340°C.

Scanning electron microscopy and x-ray emission data indicate that the zinc enters the separated phase and is also present in the bulk glassy phase. Whereas the mechanism of that action has not been fully elucidated, it is believed that the presence of ZnO causes the development of a separated amorphous phase with a larger population of smaller particles. Increasing the surface tension of the separated phase indicates that it is more difficult for the smaller particles to combine to form larger particles which might result in break sources on heating of the glass and rapid cooling in tempering.

The presence of ZnO, if appropriate for a given composition, can offset the effects of a large population of particles derived from a glass containing Li₂O, The addition of Li₂O above 0.2% significantly increases the emulsion liquidus of the glass and increases the range over which the separated phase can form As the lithium glass resides longer in the emulsion range, there is a greater tendency to form larger amorphous separated phase particles which can result in breakage of ware. The addition of ZnO serves to mitigate or eliminate this phenomenon. In short, ZnO in the opal glass compositions can essentially eliminate the undesirable large separated phase particles which can result in ware breakage in thermal upshock.

### Description of Preferred Embodiments

Table I records glass compositions, expressed in terms of parts by weight as calculated from the batch, illustrating the inventive products. Compositions 19 to 27, 31 and 32 in Table I are compositions in accordance with the invention, the other compositions being included for purposes of comparison. Because the sum of the tabulated components totals or approximately totals 100, for all practical purposes the reported figures may be deemed to represent the compositions in terms of weight percent. Inasmuch as it is not known with which cation(s) the fluoride is combined, it is merely recited as F in accordance with conventional glass analysis practice.

The actual batch ingredients may comprise any materials, either the oxides or other compounds, which, when melted together, will be converted into the desired oxide in the proper proportions. Although the following description is drawn to laboratory scale melting and forming, it will be appreciated that the illustrative compositions could also be utilized in large scale melting units.

The batch ingredients were compounded, tumble mixed to aid in securing a homogeneous melt, and deposited into platinum crucibles. The crucibles were introduced into an electrically-heated furnace operating at 1450°C-1550°C and the batches melted for four hours. The melts were cast into steel molds to produce slabs having dimensions of about 15.24 cm x 15.24 cm x 1.27 cm (6" x 6" x 0.5") or manually pressed into discs of about 7.62-10.16 cm (3-4") in diameter and about 0.3175 cm - 0.635 cm (0.125 - 0.25") in thickness. Pressing of the discs was undertaken to simulate roughly the quick quenching of the glass taking place during commercial automatic pressing operations. The glass slabs were transferred to a furnace operating at about the annealing temperature, that temperature sustained for about one hour and then cooled to room temperature retained with the furnace (approximately 30°C/hour).

The annealed slabs demonstrated no translucency. The density of the opacification exhibited by the pressed discs varied in accordance with the proximity of the forming temperature utilized to the emulsification temperature or opal liquidus of the glass. Most preferably to ensure dense opacity, the pressing temperature will not be in excess of about 80°C above the emulsification temperature.

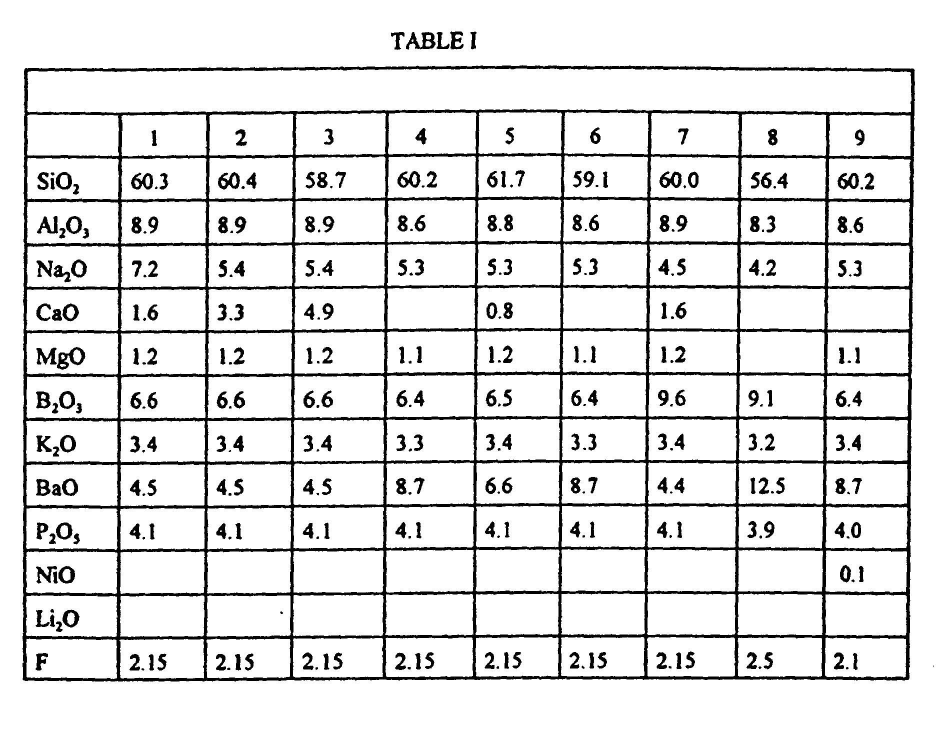

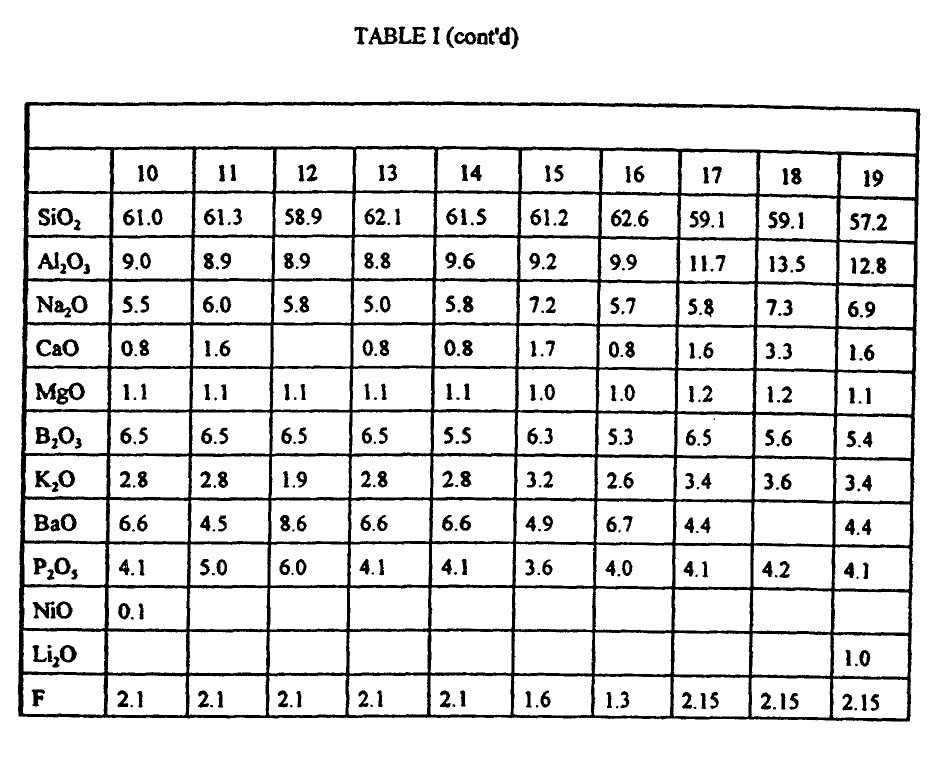

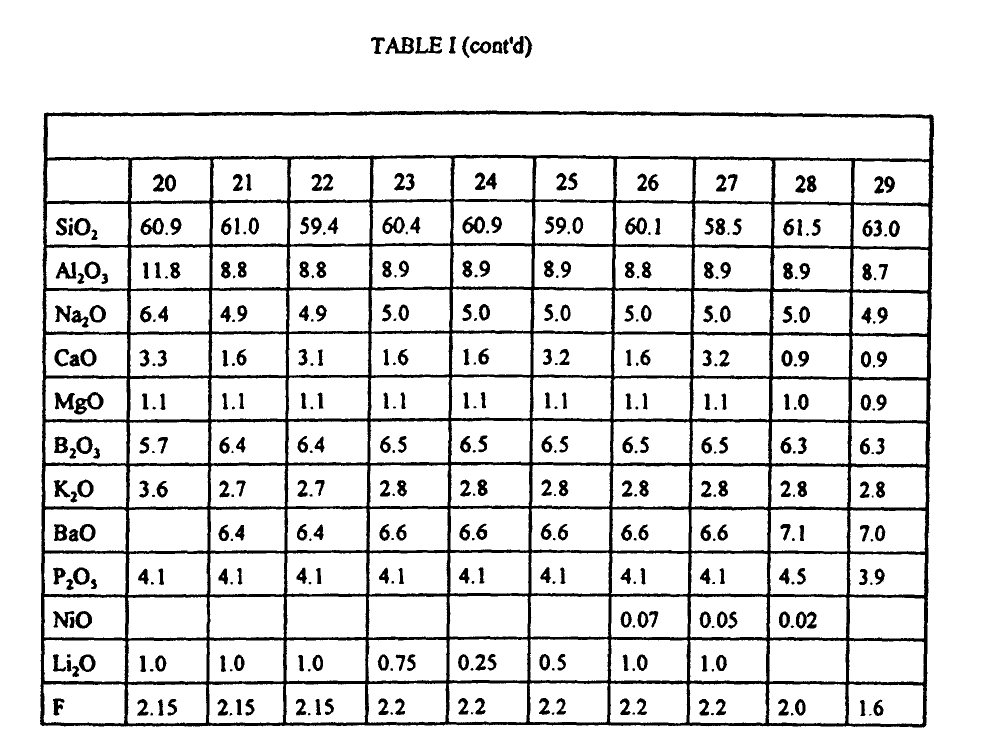

**No. 28 and 29 compositions are analysed results and have measured softening points of 796°C and 812°C, respectively.**

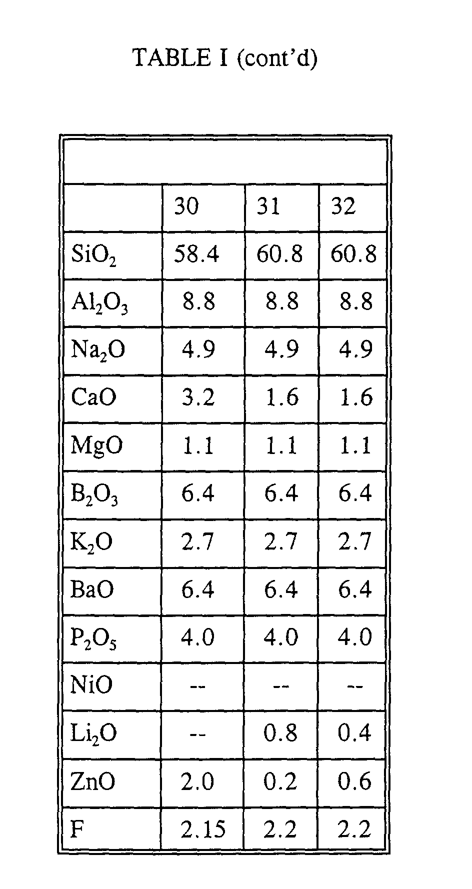

Table II records additional glass compositions, as well as softening points in terms of °C, anneal points, density, strain, coefficients of thermal expansion (CTE) over the temperature range of 25°-300°C expressed in terms of x10⁻⁷/°C, and the emulsion liquidus temperature of the various samples tested. Compositions 12 to 16 in Table II are compositions in accordance with the invention, the other compositions having been included for purposes of comparison.

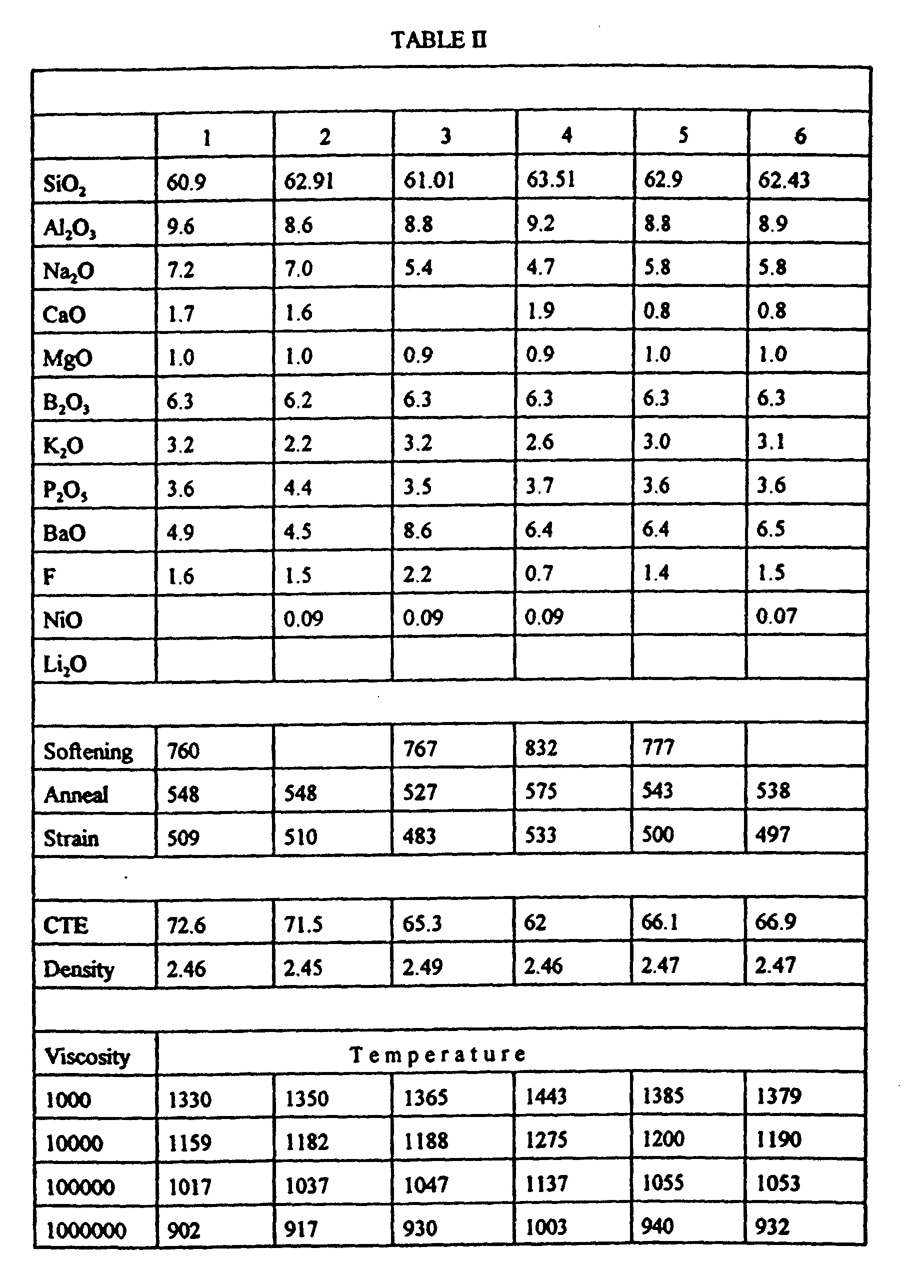

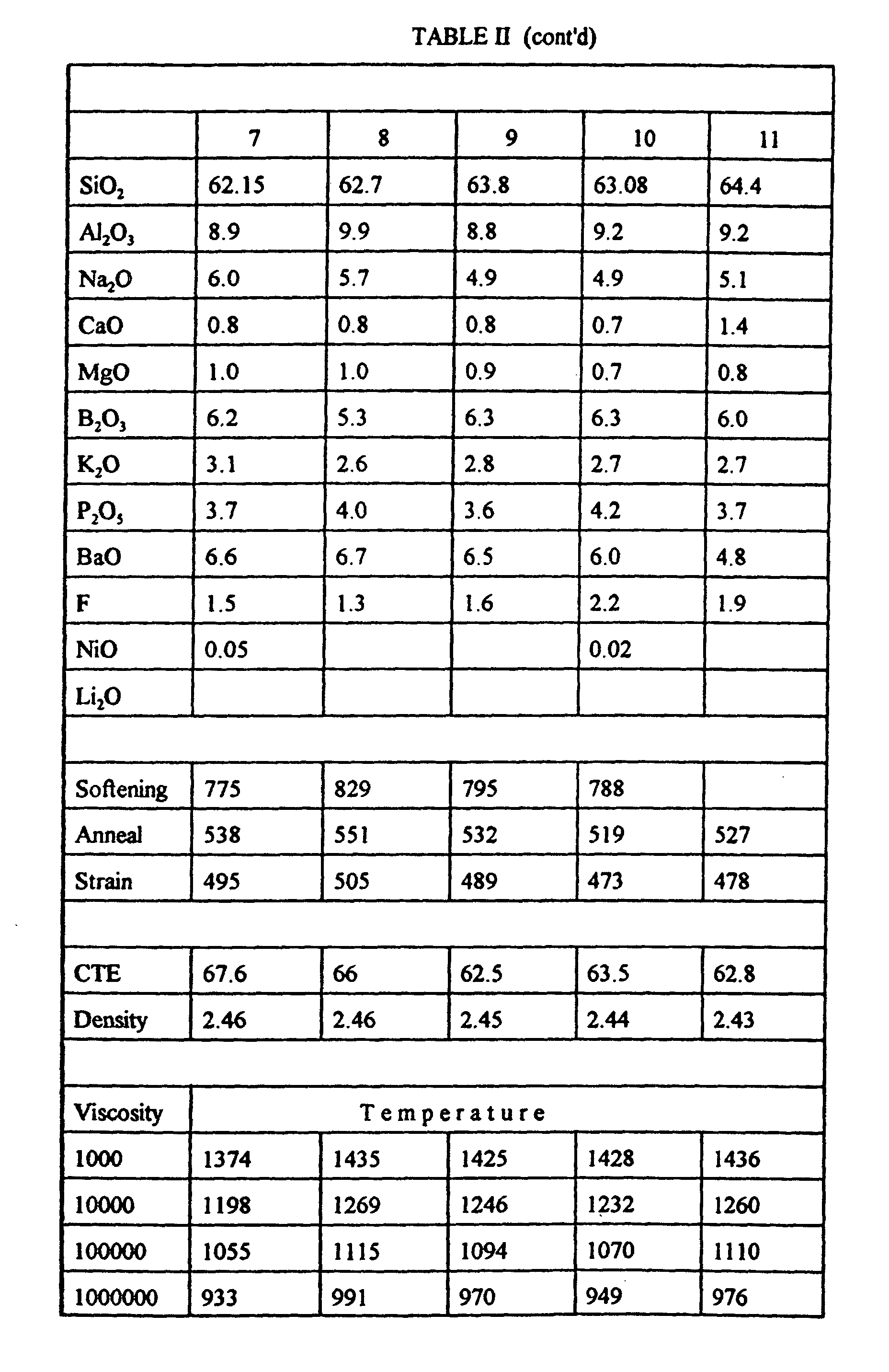

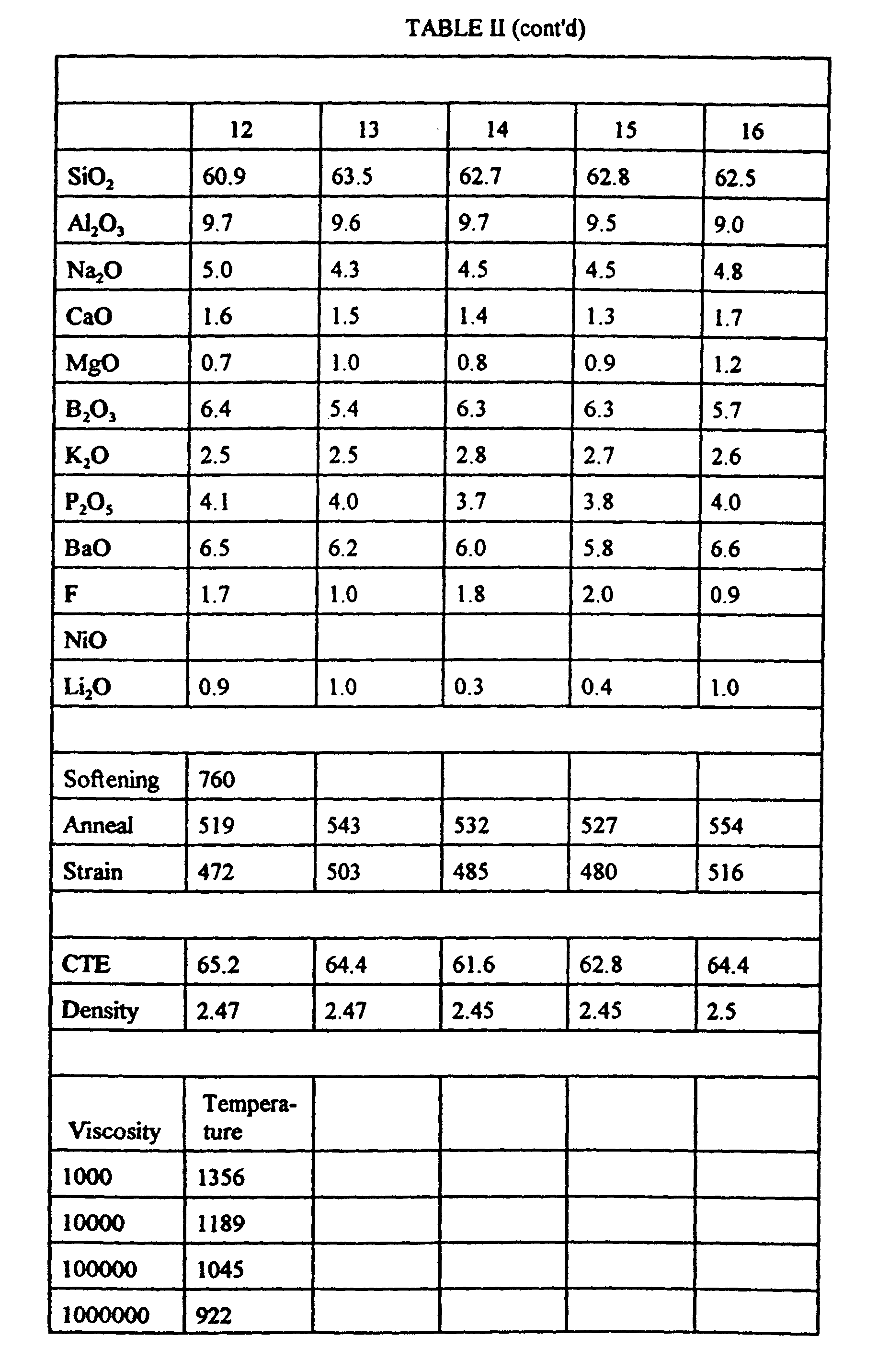

Samples of several glasses were screened for potential weathering problems by boiling in distilled water for one hour and analyzing the water for Na₂O content. Where less than 4 *µ*g Na₂O/cm² were extracted (Ext) from the specimens, the glass was considered to be desirably resistant to weathering.

Detergent resistance (D.R.) was investigated via immersing specimens of the glasses into a 0.3% aqueous solution of SUPER SOILAX® brand detergent, marketed by Economics Laboratories, St Paul, Minn., operating at 95°C for periods of 24, 48, 72 and 96 hours. An exposure of 96 hours has been estimated to be equivalent to about 10 years of use in a household dishwasher in an average home. The surface areas of the specimens were limited to a ratio of 12 square inches of glass to one pound of the solution. The samples were removed periodically from the hot solution, rinsed in tap water and wiped dry. Thereafter a portion of each specimen was coated with DYE-CHEK® brand dye penetrant, marketed by Magna-Flux Corporation, Chicago, III., the dye permitted to remain in contact therewith for 20 seconds and the sample then wiped dry.

Examples 12 through 16 of Table II represent the preferred compositions since they exhibit high emulsion liquidus, relatively high softening points, relatively low coefficients of thermal expansion and are entirely free from crystallization and, because they are more opaque and whiter. It is believed that the high opacity of the glasses of Examples 12 - 16 is due to greater phase separation. The most preferred glass compositions are represented by Examples 12 and 13, of Table II.
Non-crystalline opal glasses consisting essentially of the composition defined in Table III represents a further aspect of the invention.

**TABLE III**

| | |
|---|---|
| | |
| Element | Target (Wt %) |
| Al₂O₃ | 8.80% +\- 0.20% |
| BaO | 6.40% +\-0.15% |
| B₂O₃ | 6.40% +\-0.15% |
| CaO | 1.60% +\- 0.15% |
| F | 1.70% +\-0.15% |
| K₂O | 2.70% +\-0.15% |
| Li₂O | 1.00% +\-0.05% |
| MgO | 1.10% +\-0.15% |
| Na₂O | 4.90% +\-0.15% |
| P₂O₅ | 4.00% +\-0.15% |
| SiO₂ | Balance |

It will be appreciated that, where desired, conventional glass colorants, such as CoO, Cr₂O₃, CuO, Fe₂O₃, MnO₂, NiO and V₂O₅, may be incorporated into the base glass composition in quantities customary in the glass art, normally less than 5% by weight.

## Claims

1. A spontaneous, essentially non-crystalline opal glass exhibiting a very dense milky-white appearance, a softening point in excess of 700°C, a coefficient of thermal expansion (25°-300°C) of 65-85 x 10⁻⁷/°C, a density of at least 2.4 g/cm³, an opal liquidus higher than 1200°C, and excellent resistance to weathering and attack by alkaline detergents, consisting essentially, expressed in terms of weight percent on the oxide basis as calculated from the batch, of 1.9-3.6% K₂O, 4.2-7.3% Na₂O, 0.2-3.0% Li₂O, 0-1.2% MgO, 0-4.9% CaO, 0-12.5% BaO, 0 0.1% NiO, 0-4% ZnO, 5.3-9.6% B₂O₃, 8.8-13.5% Al₂O₃, 57.2-64.4% SiO₂, 1-6% P₂O₅, and 1.0-2.2% F.

2. An opal glass according to Claim 1, wherein the sum of MgO+CaO+BaO is in the range of 4.5 to 12.5 wt%.

3. An opal glass according to Claim 1 or 2, wherein the glass contains at least 0.4% ZnO.

4. A non-crystalline opal glass which consists essentially, expressed in terms of weight percent on the oxide basis as calculated from the batch, of:
| | |
|---|---|
| Al₂O₃ | 8.6-9.0 |
| BaO | 6.25-6.65 |
| B₂O₃ | 6.25-6.65 |
| CaO | 1.45-1.75 |
| F | 1.55-1.85 |
| K₂O | 2.55-2.85 |
| Li₂O | 0.95-1.05 |
| MgO | 0.95-1.25 |
| Na₂O | 4.75-5.05 |
| P₂O₅ | 3.85-4.15 |
| SiO₂ | Balance. |

## Patentansprüche

1. Spontanes, weitgehend nicht-kristallines Opalglas mit einer sehr dichten, milchigweißen Erscheinung, einem Erweichungspunkt oberhalb von 700°C, einem Wärmeausdehnungskoeffizienten (25°-300°C) von 65 - 85 x 10⁻⁷/°C, einer Dichte von mindestens 2,4 g/cm³, einem Opal-Liquidus größer als 1.200°C sowie einer exzellenten Beständigkeit gegenüber Witterung und gegenüber einem Angriff durch alkalischen Detergenzien, das weitgehend, ausgedrückt in Gewichtsprozent auf Basis der Oxide, berechnet aus dem Ansatz, besteht aus: 1,9 - 3,6 % K₂O, 4,2 - 7,3 % Na₂O, 0,2 - 3,0 % Li₂O, 0 - 1,2 % MgO, 0 - 4,9 % CaO, 0 - 12,5 % BaO, 0 - 0,1 % NiO, 0 - 4 % ZnO, 5,3 - 9,6 % B₂O₃, 8,8 - 13,5 % Al₂O₃, 57, 2 - 64,4 % SiO₂, 1 - 6% P₂O₅ und 1,0 - 2,2 % F.

2. Opalglas nach Anspruch 1, wobei die Summe von MgO + CaO + BaO im Bereich von 4,5 bis 12,5 Gewichtsprozent liegt.

3. Opalglas nach Anspruch 1 oder 2, wobei das Glas mindestens 0,4 % ZnO enthält.

4. Nicht-kristallines Opalglas das weitgehend, ausgedrückt in Gewichtsprozent auf Basis der Oxide, berechnet aus dem Ansatz, besteht aus:
| | |
|---|---|
| Al₂O₃ | 8,6 - 9,0 |
| BaO | 6,25 - 6,65 |
| B₂O₃ | 6,25 - 6,65 |
| CaO | 1,45 - 1,75 |
| F | 1,55 - 1,85 |
| K₂O | 2,55 - 2,85 |
| Li₂O | 0,95 - 1,05 |
| MgO | 0,95-1,25 |
| Na₂O | 4,75 - 5,05 |
| P₂O₅ | 3,85 - 4,15 |
| SiO₂ | Rest. |

## Revendications

1. Verre opalin spontané essentiellement non cristallin, présentant un aspect blanc laiteux très dense, un point de ramollissement dépassant 700 °C, un coefficient de dilatation thermique (25-300 °C) de 65 à 85 x 10⁻⁷/°C, une masse volumique d'au moins 2,4 g/cm³, une température de liquidus opalin supérieure à 1200 °C, et une excellente résistance aux agents atmosphériques et à l'attaque par des détergents alcalins, essentiellement constitué, exprimé en termes de pourcentage en poids sur la base des oxydes tel que calculé à partir de la charge de départ, de 1,9 à 3,6 % de K₂O, 4,2 à 7,3 % de Na₂O, 0,2 à 3,0 % de Li₂O, 0 à 1,2 % de MgO, 0 à 4,9 % de CaO, 0 à 12,5 % de BaO, 0 à 0,1 % de NiO, 0 à 4 % de ZnO, 5,3 à 9,6 % de B₂O₃, 8,8 à 13,5 % de Al₂O₃, 57,2 à 64,4 % de SiO₂, 1 à 6 % de P₂O₅ et 1,0 à 2,2 % de F.

2. Verre opalin selon la revendication 1, dans lequel la somme de MgO+CaO+BaO est dans la gamme de 4,5 à 12,5 % en poids.

3. Verre opalin selon la revendication 1 ou 2, dans lequel le verre contient au moins 0,4 % de ZnO.

4. Verre opalin non cristallin qui est essentiellement constitué, exprimé en termes de pourcentage en poids sur la base des oxydes tel que calculé à partir de la charge de départ, par :
| | |
|---|---|
| Al₂O₃ | 8,6-9,0 |
| BaO | 6,25-6,65 |
| B₂O₃ | 6,25-6,65 |
| CaO | 1,45-1,75 |
| F | 1,55-1,85 |
| K₂O | 2,55-2,85 |
| Li₂O | 0,95-1,05 |
| MgO | 0,95-1,25 |
| Na₂O | 4,75-5,05 |
| P₂O₅ | 3,85-4,15 |
| SiO₂ | Reste. |
